# EUROPÄISCHE PATENTSCHRIFT

(11) **EP 0 990 805 B1**
(45) Veröffentlichungstag und Bekanntmachung des Hinweises auf die Patenterteilung: **17.03.2004**
(21) Anmeldenummer: 98890283.9
(22) Anmeldetag: 02.10.1998
(51) Int. Cl.: F16B 19/02, B29C 47/90

(54) **Passelement**
Positioning pin
Boulon de positionnement

(43) Veröffentlichungstag der Anmeldung: 05.04.2000
(73) Patentinhaber: C.A. GREINER & SÖHNE GESELLSCHAFT M.B.H., 4550 Kremsmünster (AT)
(72) Erfinder: Kössl,Reinhold, A-4552 Wartberg a.d. Krems (AT)
(74) Vertreter: Hehenberger, Reinhard, Dipl.-Ing.

(56) Entgegenhaltungen:
- EP-A- 0 474 397
- EP-A- 0 849 066
- DD-A- 241 229
- DE-U- 29 710 291
- US-A- 3 604 298

## Beschreibung

Die Erfindung betrifft eine Kalibriereinrichtung für extrudierte Kunststoffprofile mit den Merkmalen des Oberbegriffes des Anspruches 1 (EP 0 849 066 A).

Einrichtungen zum Kalibrieren und gegebenfalls Kühlen von extrudierten Kunststoffprofilen, wie z.B. Fensterprofilen, bestehen üblicherweise aus zwei oder mehreren Teilen, die im zusammengesetzten Zustand eine Öffnung bilden, deren Kontur genau dem äußeren Profil des aus dem extrudierten Kunststoffstrang herzustellenden Profiles entspricht. Dabei weist jeder Teil einen Abschnitt des herzustellenden Profiles auf. Problematisch beim Zusammenbauen der Einrichtung ist, daß die einzelnen Teile sehr exakt zueinander ausgerichtet werden müssen, was üblicherweise von Hand mit herkömmlichen Meßelementen, wie z.B. Schublehren, erfolgt. Die Teile werden dann provisorisch miteinander verbunden und mit Bohrlöchern versehen. Anschließend werden die Teile miteinander verschraubt.

Damit nach einem allfälligen Zerlegen der Einrichtung in ihre Einzelteile diese wiederum in der exakt gleichen Lage zusammengebaut werden können, werden zusätzliche Hilfsmittel, wie Paßstifte, Paßfedern u. dgl. verwendet. Dadurch kann vermieden werden, daß die Teile beim neuerlichen Zusammenbau wieder in aufwendiger Weise wie oben beschrieben zueinander ausgerichtet werden müssen.

Trotz hoher Maßhaltigkeit der Teile kann jedoch nicht immer vermieden werden, daß die Einrichtung beim Probebetrieb unbefriedigende Ergebnisse liefert und Maße der Profile nicht innerhalb der zulässigen Toleranzen liegen. Auch kann nach längerem Betrieb durch Verschleißerscheinungen ein Nachjustieren einzelner Teile erforderlich werden. In solchen Fällen war es bisher üblich, die Abweichungen, die sich üblicherweise in einer Größenordnung von wenigen zehntel Millimetern bewegen, durch Zerlegen und neuerliches Ausrichten von Hand zu beheben. Anschließend mußten die Ausnehmungen für die Paßstifte, Paßfedern u. dgl. neu hergestellt werden.

Dies ist mit einem hohen Aufwand hinsichtlich Zeit und Kosten verbunden.

Aus der US-A-3,604,298 ist eine Stanzpresse bekannt, deren Teile mit Hilfe von Sets von Passbolzen einstellbar sind, deren zylindrische Segmente einen unterschiedlichen Versatz zueinander haben.

Aus der EP-A-474 397 ist eine Vorichtung zum Fixieren eines Werkstückes bekannt, das einen Schaft mit einem exzentrischen Kopf zum Festklemmen des Werkstückes aufweist.

Der vorliegenden Erfindung liegt die Aufgabe zugrunde, eine Kalibriereinrichtung der eingangs genannten Gattung zur Verfügung zu stellen, bei der ein Ausrichten der Teile von Hand, z.B. mittels Schublehre, weitgehend unnötig wird und daß bei einem Nachjustieren der Teile ein aufwendiges Setzen neuer Paßfedern, Paßstifte od. dgl. vermieden wird.

Gelöst wird diese Aufgabe mit einer Kalibriereinrichtung mit den Merkmalen des Patentanspruches 1.

Bei der Erfindung wird der Weg eingeschlagen, daß die Aufnahmen für den ersten und den zweiten Abschnitt des Paßelementes in den Teilen der Einrichtung grundsätzlich unverändert bleiben und daß ein Einstellen der Teile relativ zueinander durch Verändern des Abstandes der Paßflächen am Paßelement durchgeführt wird. Da das Verändern des Abstandes der Paßflächen am Paßelement einfach und schnell durchgeführt werden kann, ist der Aufwand für ein Anpassen bzw. Nachjustieren der Teile der Einrichtung wesentlich schneller und kostengünstiger durchführbar.

Das Verändern des Abstandes der Paßflächen am Paßelement kann auf verschiedene Weisen erfolgen. Bevorzugt wird dabei, daß ein Set von Paßelementen auf Lager gehalten wird, wobei wenigstens zwei Paßelemente vorgesehen sind, bei denen der Abstand der Paßflächen unterschiedlich vorgegeben ist.

Das Paßelement kann dabei so gestaltet sein, daß es im wesentlichen bolzenförmig mit einem Kopf, der den ersten Abschnitt bildet, und einem Schaft, der den zweiten Abschnitt bildet, ausgeführt ist.

Bei dieser Ausführungsform der Erfindung müssen, falls ein Nachjustieren der Teile erforderlich ist, nur die einzelnen Teile voneinander getrennt und die vorhandenen Paßelemente oder Paßbolzen durch solche mit einem korrigierten Abstand der Paßflächen ersetzt werden, worauf die Teile wieder miteinander verschraubt werden können.

In einer alternativen Ausführungsform der Erfindung kann auch vorgesehen sein, daß der erste und der zweite Abschnitt des Paßelementes zueinander verstellbar sind. In diesem Fall könnte ein Nachjustieren der Einrichtung z.B. so erfolgen, daß die Teile voneinander getrennt und die Paßelemente, falls erforderlich, herausgenommen und dann nachjustiert werden (durch Ändern des Abstandes zwischen den Paßflächen am ersten und am zweiten Abschnitt), worauf die Paßelemente wieder eingesetzt und die Teile miteinander verschraubt werden.

Da es insbesondere bei Paßelementen mit im wesentlichen bolzenförmiger Form, d.h. mit runder Querschnittsfläche, wichtig ist, daß das Paßelement in der richtigen Lage an einem Teil der Einrichtung festgelegt und anschließend gegen Verdrehen gesichert wird, kann das erfindungsgemäße Paßelement dadurch weitergebildet sein, daß am ersten Abschnitt wenigstens eine Einstellfläche angeordnet ist, an der eine Einstelleinrichtung angreifen kann, und vorzugsweise, daß zwei parallel zueinander angeordnete Einstellflächen vorgesehen sind, an denen die Einstelleinrichtung angreifen kann.

Dabei kommt bevorzugt eine Einstelleinrichtung zum Einstellen der Lage eines Paßelementes zum Einsatz, die dadurch gekennzeichnet ist, daß sie eine im wesentliche L-förmige Grundform aufweist und daß am ersten Schenkel der Grundform eine Anlagefläche für einen Teil der Einrichtung und am zweiten Schenkel eine Anlagefläche für die Einstellfläche am Paßelement vorgesehen ist und vorzugsweise, daß am zweiten Schenkel eine schlitzförmige Ausnehmung für den ersten Abschnitt des Paßelementes angeordnet ist.

Zum Einstellen der Lage des Paßelementes kann dann so vorgegangen werden, daß das Paßelement mit den parallelen Einstellflächen in der schlitzförmigen Ausnehmung in der Einstelleinrichtung aufgenommen und die Einstelleinrichtung dann mit dem ersten Schenkel an einer entsprechenden Anlagefläche an einem Teil der Einrichtung angelegt wird. Auf diese Weise ist die Lage des Paßbolzens hinsichtlich einer vorgegebenen Körperkante des Teiles exakt vorgegeben und auch eindeutig wieder herstellbar, wenn z.B. ein Paßelement durch ein anderes ersetzt wird.

Weitere Merkmale und Vorteile der Erfindung ergeben sich aus den übrigen Unteransprüchen und der nachfolgenden Beschreibung von Ausführungsbeispielen der Erfindung unter Bezugnahme auf die Zeichnungen.

Es zeigt:
Fig. 1 einen schematischen Schnitt durch eine teilweise dargestellte Einrichtung zum Kalibrieren und gegebenfalls Kühlen von extrudierten Kunststoffprofilen,
Fig. 2 eine Ausführungsform eines bolzenförmigen Paßelementes teilweise im Schnitt, die
Fig. 3a und 3b einen Schnitt durch ein bolzenförmiges Paßelement mit eingesetzter Fixierschraube, wobei Fig. 3a eine erste Ausführungsform und Fig. 3b eine zweite Ausführungsform zeigt,
Fig. 4 eine Draufsicht auf das Paßelement von Fig. 2, die
Fig. 5, 6 und 7 einen Montagewinkel in Vorderansicht, Seitenansicht und Draufsicht, und
Fig. 8 einen Fräskopf zum Herstellen von Ausnehmungen für einen Abschnitt des Paßelementes in den Teilen der Einrichtung.

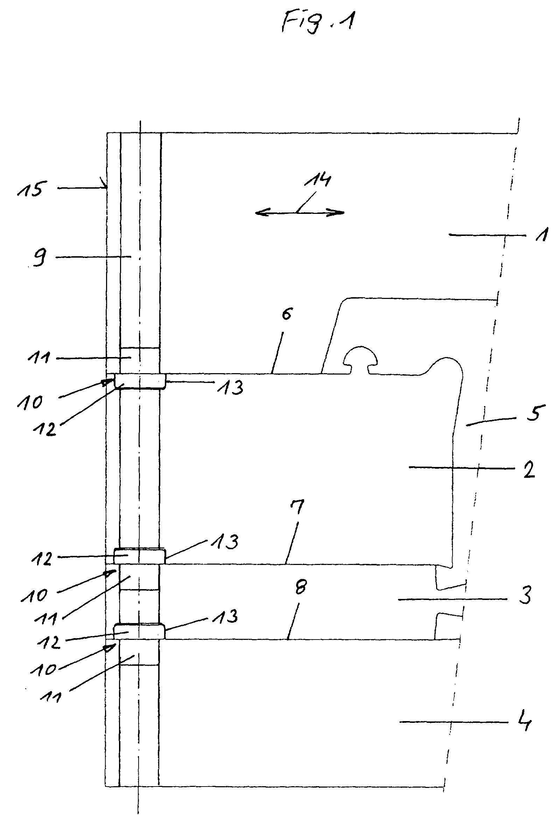

In Fig. 1 ist schematisch eine Einrichtung zum Kalibrieren und gegebenfalls Kühlen von extrudierten Kunststoffprofilen teilweise dargestellt. Fig. 1 zeigt vier Teile 1, 2, 3, 4 der Einrichtung, die eine Öffnung 5 begrenzen, welche der extrudierte Kunststoffstrang durchläuft und in dieser kalibriert wird. Die Teile 1 und 2 liegen an einer Trennfläche 6, die Teile 2 und 3 an einer Trennfläche 7 und die Teile 3 und 4 an einer Trennfläche 8 aneinander an. Alle Teile 1, 2, 3, 4 werden von einer durchgehenden Bohrung 9 durchsetzt. Des weiteren sind die Teile 1, 2, 3, 4 über eine nicht dargestellte Schraubverbindung fest miteinander verbunden. Die Anzahl der Bohrungen 9 hängt von den jeweiligen Anforderungen ab. Üblicherweise werden aber wenigstens zwei Bohrungen 9 vorgesehen sein.

Um zu verhindern, daß einmal exakt gegeneinander ausgerichtete Teile 1, 2, 3, 4 nach einem Zerlegen der Einrichtung wieder mit großem Aufwand neu zueinander ausgerichtet werden müssen, sind Paßelemente 10 vorgesehen, die im dargestellten Ausführungsbeispiel bolzenförmig mit einem Schaft 11 und einem Kopf 12 ausgeführt sind. Der Schaft 11 der Paßbolzen 10 sitzt in der Bohrung 9, wogegen die Köpfe 12 in Ausnehmungen 13 mit größerem Durchmesser als dem der Bohrung 9 aufgenommen sind. Die Köpfe 12 sind mit hoher Paßgenauigkeit in den Ausnehmungen 13 aufgenommen. Die Wände der Bohrung 9 und der Ausnehmungen 13 definieren die Paßflächen an den Teilen 1, 2, 3, 4.

Falls die ursprünglich eingestellte Lage der Teile 1, 2, 3 und 4 zueinander hinsichtlich der Maßhaltigkeit des extrudierten Kunststoffprofiles keine zufriedenstellenden Ergebnisse liefert, kann ein Justieren der Teile 1, 2, 3, 4 zueinander in Richtung des Doppelpfeiles 14 vorgenommen werden, indem die Teie 1, 2, 3 oder 4 auseinandergenommen, das jeweilige Paßelement 10 durch ein anderes ersetzt und die Einrichtung dann wieder zusammengesetzt und verschraubt wird.

Die in Fig. 1 dargestellte Einrichtung kann so hergestellt werden, daß die einzelnen Teile 1, 2, 3, 4 sowie weitere in Fig. 1 nicht dargestellte Teile aus einem Edelstahlblock herausgeschnitten werden. Dabei werden zuerst z.B. vier Bohrungen 9, in denen später die Paßelemente 10 eingesetzt werden, gebohrt. Diese Bohrungen 9 gehen durch den gesamten Block. Anschließend können mittels Drahterosionsschnitt die Durchtrittsöffnung 5 und die Trennflächen 6, 7, 8 zwischen den Teilen 1, 2, 3, 4 (letztere bis knapp an die Außenfläche 15 des Blockes) geschnitten werden. Zur endgültigen Teilung der Einrichtung werden die verbleibenden Stege der Trenflächen 6, 7, 8 keilförmig weggefräst. Nach der Trennung der Einzelteile 1, 2, 3, 4 erfolgt die Nachbearbeitung der Schnittflächen. Dann werden die entsprechenden Bohrungen für die Verschraubungen sowie die Durchgänge für die Versorgung mit Wasser bzw. Vakuum hergestellt.

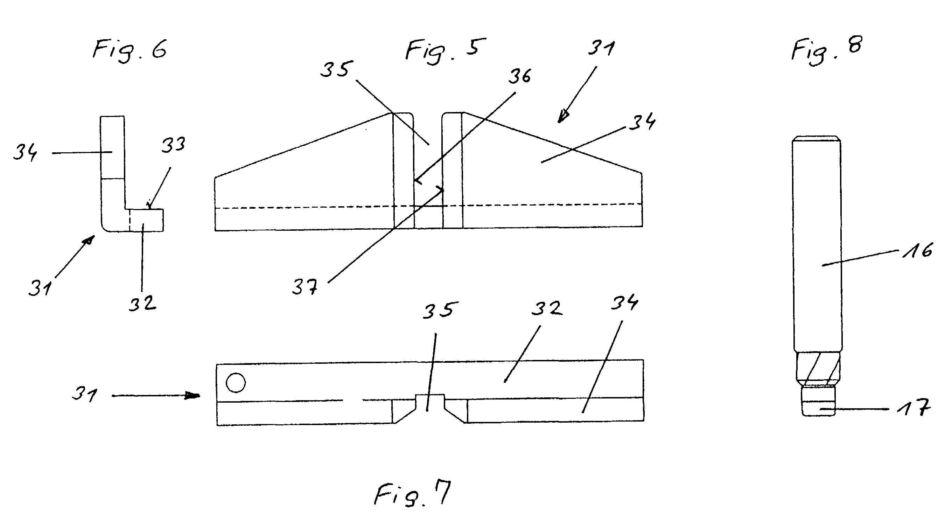

Anschließend werden die Ausnehmungen 13 für die Bolzenköpfe 12 gefräst, wobei erfindungsgemäß ein in Fig. 8 dargestellter Fräser 16 verwendet werden kann, der eine exakte Zentrierung der Ausnehmung 13 zur Bohrung 9 gewährleistet. Bei der Herstellung der Ausnehmung 13 liegt der zu bearbeitende Teil 2 oder 3 z.B. auf einem Elektromagnettisch auf, der nach dem Aufsetzen und Zentrieren des Fräsers aktiviert wird. Der Fräser 16 weist eine leicht konische Spitze 17 auf, die das Einführen und Zentrieren des Fräsers 16 erleichtert bzw. unterstützt.

Beim Zusammenbau der Einrichtung werden die Paßelemente 10 in die Bohrungen 9 eingesetzt, mit Hilfe eines in den Fig. 5 bis 7 dargestellten Montagewinkels 31 ausgerichtet und mit Sicherungsschrauben 21, 22 in den Bohrungen 9 unverdrehbar festgelegt.

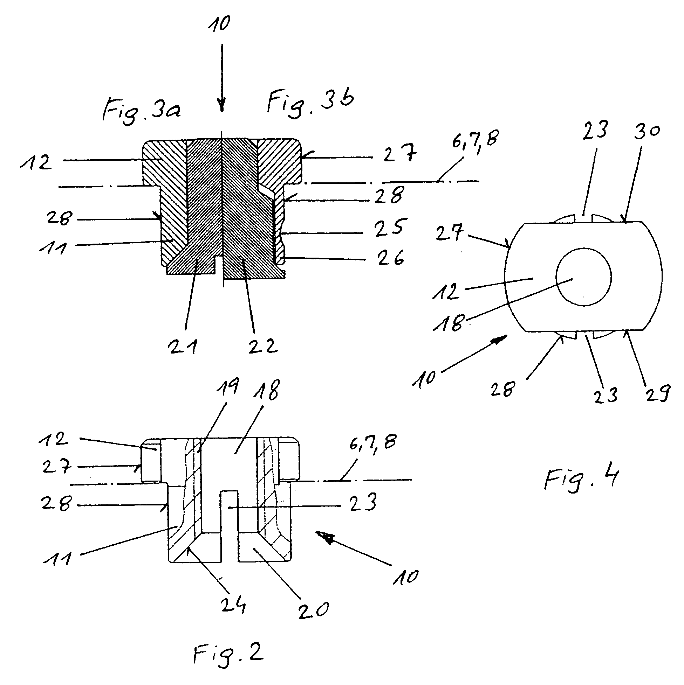

Die Paßelemente 10 können, wie in den Fig. 2 bis 4 dargestellt ausgeführt sein und weisen einen Schaft 11, einen in den Zeichnungen nicht besonders dargestellten Bolzenhals und einen Bolzenkopf 12 auf. Der Bolzenhals ist vom Bolzenschaft 11 zum Bolzenkopf 12 hin leicht konisch erweitert. Diese konische Erweiterung dient dazu, geringe Ungenauigkeiten im Bohrungsdurchmesser 9 ausgleichen zu können. Der Paßbolzen 10 weist eine zentral durchgehende Bohrung 18 auf, die wenigstens teilweise mit einem Gewinde 19 versehen ist. Am vom Bolzenkopf 12 abgewandten Ende weist die Bohrung 18 eine konische Erweiterung 20 auf. In die Bohrung 18, 20 wird eine Sicherungsschraube 21 bzw. 22 eingedreht, die wie in den Fig. 3a, 3b dargestellt, ausgeführt sein kann.

Die Form der Sicherungsschraube 21 von Fig. 3a kommt bei einem Paßbolzen 10 zum Einsatz, wie er auch in Fig. 2 und 4 dargestellt ist und bei dem der Schaft 11 durch zwei gegenüberliegende Längsschlitze 23 unterteilt ist. Beim Eindrehen bzw. Festschrauben der Sicherungsschraube 21 werden die beiden durch die Schlitze 23 getrennten Teile des Schaftes 11 auseinandergedrückt, wodurch der Paßbolzen 10 in der Bohrung 9 festgeklemmt wird, was durch die Konusfläche 24 der Erweiterung 20 unterstützt wird.

Bei der in Fig. 3b dargestellten Ausführungsform ist die Wandstärke des Schaftes 11 kleiner ausgeführt und zusätzlich durch eine umlaufende Nut 25 geschwächt. Der so entstehende Ringwulst 26 am dem Kopf 12 gegenüberliegenden Ende des Paßbolzens 10 wird beim Festziehen der Sicherungsschraube 22 nach außen gegen die Wand des Bohrloches 9 erweitert bzw. gequetscht, wodurch der Paßbolzen 10 in der Bohrung 9 festgeklemmt wird. Im in Fig. 3b dargestellten Fall erstreckt sich das Gewinde 19 nur im Bereich des Bolzenkopfes 12, nicht aber im Bereich des Bolzenschaftes 11.

Beim erfindungsgemäßen Paßelement 10 werden die Paßflächen durch die Umfangsflächen 27 und 28 am Bolzenkopf 12 und am Bolzenschaft 11 definiert. In Fig. 3a und 3b ist eine Ausführungsform eines Paßbolzens 10 dargestellt, bei dem die Paß- bzw. Umfangsflächen 27, 28 konzentrisch zueinander liegen. Ist jedoch ein Verschieben von Teilen 1, 2, 3, 4 in Richtung des Doppelpfeiles 14 (Fig. 1) erforderlich, um ein Nachjustieren der Einrichtung durchzuführen, muß der Abstand der Paßflächen 27, 28 zueinander in Richtung der Teilungsebenen 6, 7, 8 verändert werden. Dies kann erfindungsgemäß dadurch erfolgen, daß der Bolzenkopf 12 gegenüber dem Bolzenschaft 11 seitlich versetzt ist, wie dies in Fig. 2 dargestellt ist. In Fig. 2 ist der Bolzenkopf 12 gegenüber dem Bolzenschaft 11 nach links versetzt. Durch Bevorratung einer Reihe von Paßelementen 10 mit unterschiedlichem seitlichem Versatz der Paßflächen 27, 28 kann daher auch jeder beliebige seitliche Versatz von Teilen 1, 2, 3, 4 in der Einrichtung bewerkstelligt werden, indem ein Paßelement 10 mit dem jeweils erforderlichen seitlichen Versatz in die Einrichtung eingesetzt wird.

Da es insbesondere bei bolzenförmigen, d.h. im Querschnitt runden Paßelementen 10 erforderlich ist, daß diese hinsichtlich ihrer Ausrichtung exakt eingesetzt werden, da bei einem außermittigen bzw. seitlichen Versatz des Bolzenkopfes 12 gegenüber dem Bolzenschaft 11 dessen korrekte Ausrichtung sehr wesentlich ist, weisen die Paßbolzen 10 der Fig. 2 bis 4 zwei parallele Einstellflächen 29, 30 auf, die seitlich am Bolzenkopf 12 angeordnet sind. Grundsätzlich ist natürlich auch denkbar, daß mehr als zwei oder auch nur eine einzige Einstellfläche 29 oder 30 verwendet wird.

Um das exakte Ausrichten durchführen zu können, wird eine Einstelleinrichtung 31 vorgeschlagen, wie sie in den Fig. 5 bis 7 dargestellt ist. Der Einstellwinkel 31 weist, wie in Fig. 6 zu sehen ist, eine im wesentlichen L-förmige Grundform auf, wobei am ersten, kürzeren Schenkel 32 eine Anlagefläche 33 vorgesehen ist, mit welcher der Einstellwinkel 31 z.B. an der Außenfläche 15 der Einrichtung (Fig. 1) angelegt werden kann. Der zweite Schenkel 34 weist in seinem Mittelbereich einen Schlitz 35 auf, der von Seitenflächen 36, 37 definiert wird, und im rechten Winkel zur Anlagefläche 33 ausgerichtet ist.

Zum Einstellen der Lage der Paßbolzen 10 in den Teilen 1, 3 und 4 wird der Einstellwinkel 31 mit der Anlagefläche 33 an der Außenfläche 15 der Einrichtung angelegt, nachdem der jeweilige Paßbolzen 10 in die Bohrung 9 hineingesteckt wurde. Der Bolzenkopf 12 wird dann im Schlitz 35 aufgenommen, wobei die Anlageflächen 36, 37 an den Einstellflächen 29, 30 des Bolzenkopfes 12 zur Anlage kommen, wodurch der Paßbolzen 10 in seiner Lage fixiert ist und sich nicht mehr verdrehen kann. Anschließend wird die Sicherungsschraube 21 oder 22 festgedreht, worauf der Paßbolzen 10 in seiner Lage im Teil 1, 3 und 4 festgelegt ist.

Der nun erfolgende Zusammenbau der Einzelteile 1, 2, 3, 4 kann wegen der durch die Paßbolzen 10 festgelegten Stellung der Teile 1, 2, 3, 4 zueinander in sehr einfacher und rascher Weise ohne weitere Hilfsmittel zum Ausrichten erfolgen. Sollte ein Nachjustieren der Vorrichtung erforderlich sein, müssen nur die jeweiligen Teile 1, 2, 3 oder 4 auseinandergenommen, der entsprechende Paßbolzen 10 durch einen anderen mit einem anderen seitlichen Versatz der Paßflächen 27, 28 ersetzt, dieser wie beschrieben fixiert und anschließend die Form wieder zusammengebaut werden. Dies kann sehr rasch durchgeführt werden, da die neuerliche Lage der Teile 1, 2, 3, 4 zueinander durch die Paßbolzen 10 (gegebenenfalls korrigiert) festgelegt ist.

## Patentansprüche

1. Kalibriereinrichtung für extrudierte Kunststoffprofile, mit der die Kunsstoffprofile gegebenenfalls auch gekühlt werden können, mit wenigstens zwei Teilen (1, 2, 3, 4), die an einer Trennfläche (6, 7, 8) aneinander anliegen, und die im zusammengesetzten Zustand eine Öffnung (5) begrenzen, deren Kontur dem äußeren Profil des aus dem extrudierten Kunststoffstrang herzustellenden Profiles entspricht, und mit einem Passelement (10) zum Ausrichten der zwei aneinander anliegenden Teile (1, 2, 3, 4) relativ zueinander, wobei das Passelement (10) diese Trennfläche durchsetzend in beiden Teilen (1, 2, 3, 4) aufgenommen ist, wobei das Passelement (10) einen ersten Abschnitt (12), der in einem Teil (2, 3) aufgenommen ist, und einen zweiten Abschnitt (11), der in einem anderen Teil (1, 3, 4) aufgenommen ist, aufweist, und wobei am ersten (12) und am zweiten Abschnitt (11) jeweils eine Passfläche (27, 28) angeordnet ist, der jeweils eine Passfläche (9, 13) an den Teilen (1, 2, 3, 4) zugeordnet ist, **dadurch gekennzeichnet, dass** der in einer bestimmten Richtung (14) parallel zu der Trennfläche (6, 7, 8) gemessene Abstand zwischen der Passfläche (27) am ersten Abschnitt (12) und der Passfläche (28) am zweiten Abschnitt (11) des Passelementes (10) veränderbar ist.

2. Kalibriereinrichtung nach Anspruch 1, **dadurch gekennzeichnet, dass** der erste (12) und der zweite Abschnitt (11) zueinander verstellbar sind.

3. Kalibriereinrichtung nach Anspruch 1, **dadurch gekennzeichnet, dass** ein Set mit wenigstens zwei Passelementen (10) vorgesehen ist, bei denen der Abstand der Passflächen (27, 28) unterschiedlich vorgegeben ist.

4. Kalibriereinrichtung nach einem der Ansprüche 1 bis 3, **dadurch gekennzeichnet, dass** das Passelement (10) im wesentlichen bolzenförmig mit einem Kopf (12), der den ersten Abschnitt bildet, und einem Schaft (11), der den zweiten Abschnitt bildet, ausgeführt ist.

5. Kalibriereinrichtung nach einem der Ansprüche 1 bis 4, **dadurch gekennzeichnet, dass** eine Sicherung (21, 22) gegen Verdrehen des Passelementes (10) vorgesehen ist.

6. Kalibriereinrichtung nach Anspruch 5, **dadurch gekennzeichnet, dass** im Passelement (10) eine Gewindebohrung (18, 19) angeordnet ist, in die eine Sicherungsschraube (21, 22) eindrehbar ist.

7. Kalibriereinrichtung nach Anspruch 6, **dadurch gekennzeichnet, dass** die Gewindebohrung (18, 19) koaxial im Passelement (10) angeordnet ist, und die Sicherungsschraube (21, 22) eine im eingeschrauben Zustand das Passelement (10) aufspreizende Wirkung auf dieses ausübt.

8. Kalibriereinrichtung nach einem der Ansprüche 1 bis 7, **dadurch gekennzeichnet, dass** es Mittel (29, 30, 31) zum Einstellen seiner Lage an den Teilen (1, 2, 3, 4) aufweist.

9. Kalibriereinrichtung nach Anspruch 8, **dadurch gekennzeichnet, dass** am ersten Abschnitt (12) wenigstens eine Einstellfläche (29, 30) angeordnet ist, an der eine Einstellerinrichtung (31) angreifen kann.

10. Kalibriereinrichtung nach Anspruch 9, **dadurch gekennzeichnet, dass** zwei parallel zueinander angeordnete Einstellflächen (29, 30) vorgesehen sind, an denen die Einstelleinrichtung (31) angreifen kann.

## Claims

1. Calibration device for extruded plastic material profiles, with which the plastic material profiles can if necessary also be cooled, having at least two parts (1, 2, 3, 4), which abut against each other at an interface (6, 7, 8), and which in the assembled state delimit an opening (5), the contour of which corresponds to the exterior profile of the profile which is to be produced from the extruded plastic material strand, and having a positioning pin (10) for aligning the two parts (1, 2, 3, 4), which abut against each other, relative to each other, the positioning pin (10) being received in both parts (1, 2, 3, 4) penetrating this interface, the positioning pin (10) having a first portion (12) which is received in one part (2, 3) and a second portion (11) which is received in another part (1, 3, 4), and on the first (12) and on the second portion (11) respectively a positioning face (27, 28) being disposed, to which one positioning face (9, 13) respectively on the parts (1, 2, 3, 4) is assigned, **characterised in that** the spacing, measured in one specific direction (14) parallel to the interface (6, 7, 8), between the positioning face (27) on the first portion (12) and the positioning face (28) on the second portion (11) of the positioning pin (10) can be changed.

2. Calibration device according to claim 1, **characterised in that** the first (12) and the second portion (11) are displaceable relative to each other.

3. Calibration device according to claim 1, **characterised in that** a set with at least two positioning pins (10) is provided, in which the spacing of the positioning faces (27, 28) is prescribed differently.

4. Calibration device according to one of the claims 1 to 3, **characterised in that** the positioning pin (10) is configured substantially bolt-shaped, with a head (12) which forms the first portion and with a shaft (11) which forms the second portion.

5. Calibration device according to one of the claims 1 to 4, **characterised in that** a safety device (21, 22) against turning of the positioning pin (10) is provided.

6. Calibration device according to claim 5, **characterised in that** a threaded boring (18, 19) is disposed in the positioning pin (10), into which a safety screw (21, 22) can be screwed.

7. Calibration device according to claim 6, **characterised in that** the threaded boring (18, 19) is disposed coaxially in the positioning pin (10) and the safety screw (21, 22), in the screwed-in state, exerts an effect upon the positioning pin (10) of expanding the latter.

8. Calibration device according to one of the claims 1 to 7, **characterised in that** it has means (29, 30, 31) for adjusting its position on the parts (1, 2, 3, 4).

9. Calibration device according to claim 8, **characterised in that**, on the first portion (12), at least one adjustment face (29, 30) is disposed, on which an adjustment device (31) can engage.

10. Calibration device according to claim 9, **characterised in that** two adjustment faces (29, 30) which are disposed parallel to each other are provided, on which the adjustment device (31) can engage.

## Revendications

1. Dispositif de calibrage pour des profilés extrudés en matière plastique, à l'aide duquel les profilés en matière plastique peuvent également être refroidis le cas échéant, avec au moins deux parties (1, 2, 3, 4) qui sont appliquées l'une contre l'autre au niveau d'une surface de séparation (6, 7, 8) et qui, à l'état assemblé, délimitent une ouverture (5) dont le contour correspond au profil extérieur du profilé à fabriquer à partir de la barre de matière plastique extrudée, et avec un élément d'ajustage (10) pour aligner l'une par rapport à l'autre les deux parties (1, 2, 3, 4) appliquées l'une contre l'autre, l'élément d'ajustage (10) en traversant la surface de séparation être reçu dans les deux parties (1, 2, 3, 4), l'élément d'ajustage (10) comportant un premier tronçon (12) qui est reçu dans une partie (2, 3) et un deuxième tronçon (11) qui est reçu dans l'autre partie (1, 3, 4), et une surface d'ajustage (27, 28) étant aménagée respectivement sur le premier tronçon (12) et le deuxième tronçon (11), surfaces auxquelles est associée chaque fois une surface d'ajustage (9, 13) sur les parties (1, 2, 3, 4), **caractérisé en ce que** la distance entre la surface d'ajustage (27) sur le premier tronçon (12) et la surface d'ajustage (28) sur le deuxième tronçon (11) de l'élément d'ajustage (10), mesurée dans une direction (14) déterminée, parallèle au plan de séparation (6, 7, 8), est variable.

2. Dispositif de calibrage selon la revendication 1, **caractérisé en ce que** le premier (12) et le deuxième tronçon (11) sont réglables l'un par rapport à l'autre.

3. Dispositif de calibrage selon la revendication 1, **caractérisé en ce qu'**il est prévu un jeu avec au moins deux éléments d'ajustage (10), dans lesquels la distance entre les surfaces d'ajustage (27, 28) est différente.

4. Dispositif de calibrage selon une des revendications 1 à 3, **caractérisé en ce que** l'élément d'ajustage (10) a essentiellement la forme d'un boulon avec une tête (12) qui constitue le premier tronçon et un fût (11) qui constitue le deuxième tronçon (11).

5. Dispositif de calibrage selon une des revendications 1 à 4, **caractérisé en ce qu'**un moyen de freinage (21, 22) empêchant la rotation de l'élément d'ajustage (10) est prévu.

6. Dispositif de calibrage selon la revendication 5, **caractérisé en ce qu'**un trou taraudé (18, 19) dans lequel une vis de freinage (21, 22) peut être vissée est aménagé dans l'élément d'ajustage (10).

7. Dispositif de calibrage selon la revendication 6, **caractérisé en ce que** le trou taraudé (18, 19) est aménagé de manière coaxiale dans l'élément d'ajustage (10) et la vis de freinage (21, 22) à l'état vissé a une action d'expansion sur l'élément d'ajustage.

8. Dispositif de calibrage selon une des revendications 1 à 7, **caractérisé en ce qu'**il comporte des moyens (29, 30, 31) pour régler sa position sur les parties(1, 2, 3, 4).

9. Dispositif de calibrage selon la revendication 8, **caractérisé en ce qu'**au moins une surface de réglage, sur laquelle un dispositif de réglage (31) peut agir, est aménagée dans le premier tronçon (12).

10. Dispositif de calibrage selon la revendication 9, **caractérisé en ce qu'**il est prévu deux surfaces de réglage (29, 30) mutuellement parallèles, sur lesquelles le dispositif de réglage (31) peut agir.
